# EUROPEAN PATENT SPECIFICATION

(11) **EP 0 456 967 B1**
(45) Date of publication and mention of the grant of the patent: **11.09.1996**
(21) Application number: 91102251.5
(22) Date of filing: 18.02.1991
(51) Int. Cl.: B23K 11/11

(54) **Spot welder and method for using**
Punktschweissgerät und sein Benutzungsverfahren
Soudeuse par point et sa méthode d'utilisation

(30) Priority: 16.05.1990 JP 51140/90; 23.10.1990 JP 285482/90; 29.08.1990 EP 90116540
(43) Date of publication of application: 21.11.1991
(73) Proprietor: Hirane, Akio, Meguro-ku, Tokyo (JP)
(72) Inventor: Hirane, Akio, Meguro-ku, Tokyo (JP)
(74) Representative: Einsel, Martin, Dipl.-Phys.

(56) References cited:
- EP-A- 0 284 376
- FR-A- 2 638 668
- US-A- 3 415 973
- US-A- 3 860 778
- PATENT ABSTRACTS OF JAPAN vol. 13, no. 204 (M-825)(3552) 15 May 1989 & JP-A-1 027 782 (MAZDA MOTOR COMPANY) * abstract *
- PATENT ABSTRACTS OF JAPAN vol. 8, no. 276 (M-346)(1713) 18 December 1984 & JP-A-59 147 783 (HITACHI SEISAKUSHO K.K.) * abstract *

## Description

This invention relates to a welding method using a spot welder comprising a welding power source which generates high current at low voltage and output cables leading from terminals in said power source to the work to be welded.

From FR-A 2 638 668 it is known to weld two sheets of metal having therebetween polymere coatings with pairs of electrodes. Because of the isolation due to a polimere coating at first there is a small current flow between two electrodes. This small current leads to melting of the polymere coatings between the metal sheels so that the resistance between the electrodes becomes smaller and a big welding current can flow to an able connection of the two sheets of metal.

The drawback of this known solution is that because of unsufficient elimination of the coating sparks may occure, the sheets of metal may deforme because of the applied high temperature and the metal may even burn through.

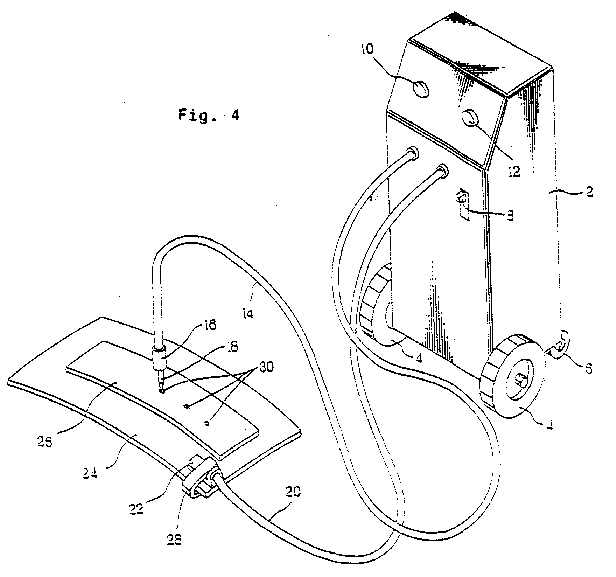

Figure 4, described below, illustrates a conventional spot welder. In Figure 4, reference numeral 2 designates a substantially rectangular shaped welder body, which is provided at its lower portions with pairs of left and right large and small wheels 4 and 6 so that the welder body may be moved according to the work conditions.

Externally of the welder body 2 are provided a main switch 8 for turning on and off a power source for the whole welder and adjusting knobs 10 and 12 for adjusting welding current values, welding time and the like.

The welder body 2 is interiorly provided with a welding power source (not shown) comprising a transformer and a rectifier which produces a DC low voltage and a large current. An output side of the welding power source is provided with a plus side terminal (not shown) and a minus side terminal (not shown).

A distal end of the plus side cable 14 is electrically connected to the plus side terminal on the output side of the welding power source, the plus side cable 14 being drawn outside from the front side of the welder body 2. A tip holder 16 is mounted on the extreme end of the plus side cable 14, and a welding tip 18 is mounted on the extreme end of the tip holder 16.

A distal end of the minus side cable 20 is connected to the minus side terminal on the output side of the welding power source, the minus side cable 20 being drawn out from the front side of the welder body 2.

An example of the case where one-side spot welding is applied to articles 24 and 26 by use of this spot welder will be described below.

First, a flat plate 22 connected to ground is mounted on the extreme end of the minus side cable 20 drawn out from the front side of the welder body 2.

Then, the opposed surfaces of the articles to be welded 24 and 26 are partly abraded or ground by a sander or the like so that the conductivity of areas in contact is improved. The articles to be welded 24 and 26 are then stacked.

Next, the minus side cable 20 is connected to ground and the ground plate 22 at the extreme end of the minus side cable 20 is secured to the lower article 24 to be welded by means of a clamp 28 in electrically connecting relation.

Welding current value (about 50A) and welding time (0.3 to 0.4 second) are set by adjusting knobs 10 and 12. The main switch 8 of the welder body 2 is turned on and the extreme end of the welding tip 18 on the output side is pressed against a spot 30 of the article 26 to be welded.

A large highly concentrated current flows into the spot 30 (portions against which the welding tip 18 is pressed) of the articles 24 and 26 to apply one-side spot welding between said articles 24 and 26.

However, the conventional spot welder has a problem in that when the spot 30 against which the welding tip 18 is pressed is spaced from the part with which the ground plate 22 is placed in close contact, the voltage drop increases and the current flowing into the spot, against which the welding tip 18 is pressed, decreases, sometimes resulting in an incomplete welding. Therefore, heretofore, in welding such a spot as described above, the welding time is extended. When the welding time is extended, the working efficiency is lowered and a large amount of heat is generated in the area surrounding the spot which anneals the metal. As a result, the strength of the articles 24 and 26 to be welded is lowered and, in addition, said articles become deformed.

Next, an example of the case where both-side spot welding is applied, by use of the conventional spot welder, to two overlapped iron plates (articles to be welded) which are coated over the entire surfaces thereof will be described below.

First, a tip holder (not shown) and a welding tip (not shown) are mounted at the extreme end of the minus side cable 20 drawn out from the front side of the welder body 2.

Then, parts of the front and back surfaces of the two iron plates are respectively abraded or ground by use of a sander or the like to remove the coating on the surfaces of said parts, and these two iron plates are laid one upon the other in such a manner that the thus ground parts overlap each other; and a both-side spot welding is applied to these ground parts to become electrically conductive.

The welding tip has thus been heated to become hot through this welding, so that the both-side spot welding is carried out, melting and destroying the coating by this hot welding tip.

In case the coating is too firm or stubborn to perform the welding, the coating is destroyed by swinging the spot gun right and left in a gouging manner, whereby the both-side welding is effectuated.

This conventional both-side spot welder is advantageous in that both-side spot welding can be applied to two iron plates coated over the entire surfaces thereof in a short period of time.

However, in case of this conventional both-side spot welder, spot welding is effected in such a manner that a large amount of electric current is made to flow in almost continuous state to heat the welding tip forcibly, so that, if the receiving-end circuit breaker or fuse is of a small capacity, it is liable to blow; and thus a receiving circuit breaker or fuse of a large capacity must be used.

Furthermore, in case of this conventional both-side spot welder, a large amount of current is applied almost continuously, so that the cable, the transformer, the diodes and other parts heat, as a result of which the service factors thereof fall, and in addition, due to this heat, the welder body is deteriorated, so that the useful life of the welder body is shortened.

Moreover, in case of spot-welding iron plates by use of this conventional both-side spot welder, when the coating is destroyed by the welding tip, sparks are caused at the extreme end of the welding tip to bore a hole in the iron plates or, due to the heat of the sparks, the material quality of the iron plates is changed, as a result of which the strength of the spot weld is weakened, or the extreme end of the welding tip is worn away in a short period of time.

Besides, among the conventional both-side spot welders, there is a type of welder in which a spot gun and a transformer are arranged in one integral structure. In case of this type of welder, the operator must quickly perform the welding work by carrying the whole of the heavy welder with his hands, before the welding tip gets cooled; and thus the operator becomes very tired.

### SUMMARY OF THE INVENTION

The object of this invention is to obviate the aforementioned problems. A further object of the invention is to provide a spot welder which can apply a good one-side or two-side spot weld in a short period of time without producing annealing or deformation in the vicinity of a spot to be welded, and in which a receiving-side circuit breaker or fuse of a small capacity can be used, the useful life of the main body is long, and it is ensured that the articles to be welded are prevented from being bored during welding, the strength of the spot weld is prevented from being weakened by the sparking heat, and the extreme end of the welding tip is prevented from being worn away in a short period of time; also to provide a welding method for using said spot welder.

The spot welder according to this invention comprises a welding power source for generating a low voltage and a large current and a plurality of output side cables connected to generator terminals on the output side of said welding power source. At least two output side cables are connected to one generator terminal.

In addition, for achieving the aforesaid objects, the welding method using the aforementioned spot welder having at least three output side cables, comprises grinding at least a part of the front surface of one of overlapped articles to be welded, electrically connecting at least one of said three or more output side cables to one of the overlapped articles to be welded, interposing the parts of said articles to be welded between a welding tip connected to a second of said output side cables and another welding tip connected to a third of said output side cables and applying a current under this state.

By using the spot welder according to this invention, any coating or the like on the back of the article at the spot to be welded is also removed and the metal exposed. Thus, the welding electrode is in good electrical contact with the exposed metal so that a large current flows in a short period of time. Furthermore, if the spot welder according to this invention has two ground side cables connected to an article to be welded so that the article is positioned between them, the voltage drop between the ground side cable and the spot to be welded decreases, and the difference in electrical resistance due to the different location of the spot to be welded almost disappears.

### THE DRAWINGS

Figure 1 is a perspective view of a spot welding apparatus constructed in accordance with the invention connected to superimposed parts to be spot welded.

Figure 2 is a sectional view through said superimposed parts connected to the apparatus shown in Figure 1.

Figure 3 is a perspective view of a minus side cable according to another embodiment of the invention.

Figure 4 is a perspective view of a spot welding apparatus illustrative of the prior art.

### DETAILED DESCRIPTION

Preferred embodiments of this invention will be described hereinafter in detail with reference to the accompanying drawings.

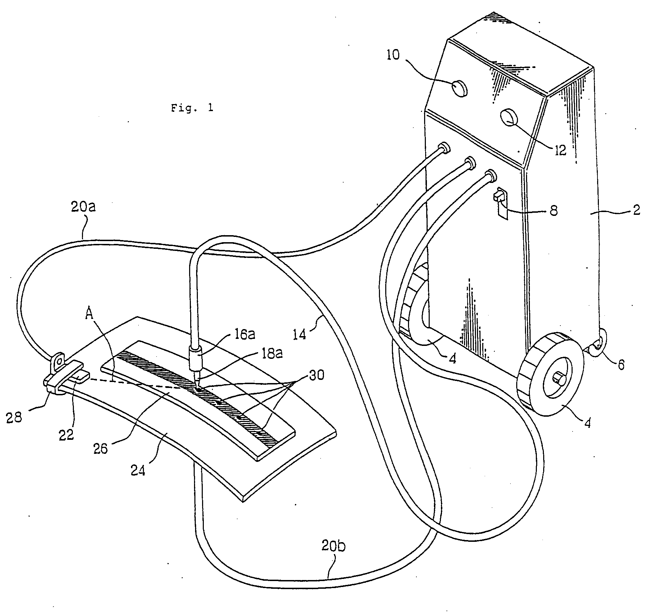

In Figure 1, reference numeral 2 designates a substantially rectangular shaped welder body, which is provided at its lower portions with pairs of left and right large and small wheels 4 and 6 so that the welder body may be moved according to the work conditions.

Externally of the welder body 2 are provided a main switch 8 for turning on and off a power source for the whole welder and adjusting knobs 10 and 12 for adjusting welding current values, welding time and the like.

The welder body 2 is interiorly provided with a welding power source (not shown) comprising a transformer and a rectifier which produces a DC low voltage and a large current. The output side of the welding power source is provided with a plus side terminal (not shown) and a minus side terminal (not shown).

The distal end of the plus side cable 14 connects to the plus side terminal on the output side of the welding power source, the plus side cable 14 being drawn out from the front side of the welder body 2. A tip holder 16a is mounted on the extreme end of the plus side cable 14 and a welding electrode tip 18a is mounted on the extreme end of the electrode holder 16a.

Distal ends of two minus side cables 20a and 20b connect to the minus side terminal on the output side of the welding power source, the minus side cables 20a and 20b being drawn out from the front side of the welder body 2.

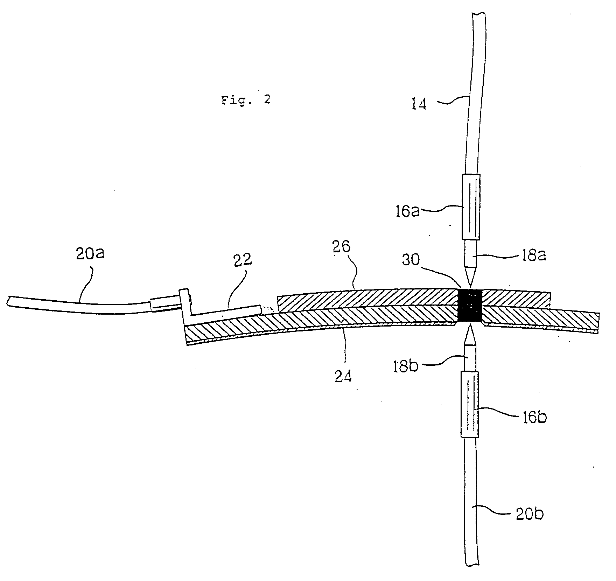

Figure 2 is a sectional view of essential parts of this invention. As shown in Figure 2, ground plate 22 is mounted on the extreme end of one minus side cable 20a out of the minus side cables 20a and 20b. A welding electrode tip 18b is mounted on the extreme end of the other minus side cable 20b through the electrode holder 16b.

In using the apparatus, opposed surfaces of the articles 24 and 26 to be welded are ground by a sander or the like so that said surfaces in the area of the weld are made electrically conductive. Articles 24 and 26 are placed one above the other.

An elongated strip (indicated by the diagonal lines in Figure 1), in the front area of the spots 30 to be welded is ground by a sander or the like to expose the metal surface to improve the electrical conductivity.

Next, the ground plate 22, attached to the extreme end of the minus side cable 20a, is placed in close contact with a predetermined position of the lower article 24 to be welded by means of a clamp 28.

As shown in Figure 2, a spot 30 to be welded of said articles 24 and 26 is interposed between the welding electrode 18b connected to the other minus side cable 20b and the welding electrode 18a connected to the plus side cable 14.

Subsequently, welding current value and welding time (0.3 to 0.4 second) are set by adjusting knobs 10 and 12, and the main switch 8 of the welder body 2 is turned on to apply current.

With the arrangement as described above, the spot 30 to be welded is heated by the current flowing between the ground plate 22 connected to said article 24 and the spot 30 to be welded, as indicated by the broken line A in Figure 1, and any coating or the like on the back of said spot 30 is removed, and the metal surface is exposed.

In this state, the resistance between the welding tip 18a and the welding tip 18b is less than the resistance between the welding tip 18a and the ground plate 22. For this reason, a large current flows between the welding tip 18a and the welding tip 18b in a short period of time to obtain a rigid spot welded area.

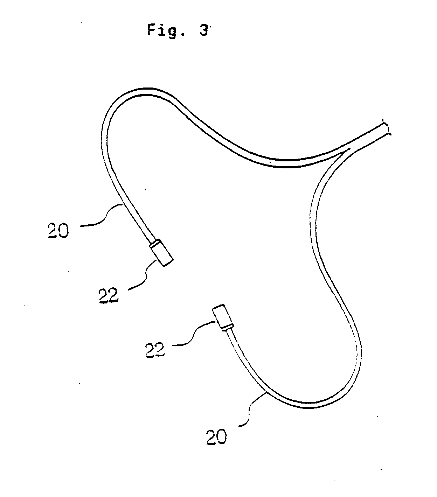

As shown in Figure 3, one minus side cable 20 may be drawn out of the welder body 2, and the cable may be branched into two or more in number.

It will be understood by those skilled in the art that, while a transformer and rectifier has been described as power supply to obtain DC output power, the present invention can also be used with an AC power supply.

According to this invention, when a current is applied to articles to be welded, the coating or the like on the back of said articles at the spot to be welded is removed by the current which first flows from the ground side cable to the plus side cable whereby the resistance becomes low. The removing of the coating on the back of the spot to be welded is attributable to the fact that the current heat burns away said coating. Then, a large current flows into the spot with the low resistance from the welding electrode connected to the minus side cable to the welding electrode connected to the plus side cable in a short period of time. Therefore, a rigid welding can be produced without causing deterioration or deformation of the article to be welded due to generation of heat.

Furthermore, according to this invention, in the case where at least two or more ground side cables are connected to the article to be welded, even if the spot to be welded is shifted, the variation of electrical resistance between the part to which the ground side cable is connected and the spot to be welded can be minimized. Accordingly, a rigid welding of all parts is produced under substantially the same conditions.

Moreover, according to this invention, since the diameter of the ground side cable can be reduced, the ground side cable can be moved easily, thus providing efficient operation of the welding apparatus.

Besides, in case of the prior art conventional machine, the breaker on the receiving side uses 50A, but about 30A is sufficient under the three cable system according to the present invention.

Moreover, since, according to the present invention, the coating on the back side of the article to be welded is removed by burning, as described above, there is obtained the effect that both-side spot welding can be performed without removing by abrading or grinding the coating on a part (spot) of the back sides of articles to be welded which (part) is not manually accessible.

Furthermore, since, according to the present invention, the coating on the back of the spot to be welded is removed by the heat due to the current flowing between the ground cable and one welding tip, there is obtained the effect that there is no necessity of applying a large amount of current to the welding tip to heat the welding tip forcibly; and therefore, the receiving-side circuit breaker or fuse can be made small in capacity, and the useful life of the welder body can be lengthened.

Besides, according to the present invention, a current flows between the ground cable and one welding tip at the early stage of welding, so that sparks are hard to occur; and therefore, there is obtained the effect that the articles to be welded are prevented from being bored, the strength of the spot weld is presented from being weakened due to heat, or the extreme end of the welding tip is prevented form being worn away in a short period of time.

## Claims

1. A welding method using a spot welder comprising a welding power source which generates high current at low voltage, at least three output cables (14, 20a, 20b) leading from terminals in said power source to the articles to be welded,
said method comprising
providing a upper article (26) and a lower article (24) to be welded in overlapped position, having a coating covering at least the surfaces of the articles (24, 26) in the area to be welded,
abrading the opposed surfaces of both of said articles (24, 26) as well as the front surface of said upper article (26) in the area to be spot welded to remove the coating in the area of the weld,
bringing said articles (24, 26) into overlapped position with their opposed abraded surfaces being in contact with each other whereby the upper surface of the upper article (26) builds the said front surface and the lower surface of the lower article (24) builds the back surface,
electrically connecting at least one extreme end of one (20a) of said cables (14, 20a, 20b) to said lower article (24) interposing said overlapped articles (24, 26) in the area to be welded between a pair of welding electrodes (18a, 18b) so that the first electrode (18a) is in contact with the front surface of said upper article (26) and the second electrode (18b) is in contact with the back surface of said lower article (24) with said two electrodes (18a, 18b) being electrically connected to the ends of two (14, 20b) of said cables (14, 20a, 20b) of different polarity, while said at least one extreme end of said cable (20a) and said second electrode (18b) which are in contact with said lower article (24) have the same polarity,
and applying a current flow from said first electrode (18a) to said at least one extreme end of said cables (20a) connected to said lower article (24), whereby the coating on the back surface of said lower article (24) at the spot to be welded is removed by burning so that said second welding electrode (18b) gets good electrical contact with the surface of said lower article (24) and a large welding current flows between the two electrodes (18a, 18b).

## Patentansprüche

1. Schweißverfahren unter Verwendung eines Punktschweißgerätes mit einer Schweißenergiequelle, die einen hohen Strom bei niedriger Spannung erzeugt, zumindest drei Ausgabekabeln (14, 20a, 20b), die von Anschlüssen in der Energiequelle zu den zu verschweißenden Werkstücken führen, wobei das Verfahren folgende Schritte umfaßt:
- das Vorsehen eines oberen Werkstücks (26) und eines unteren Werkstücks (24), die in einander überlappender Position zu verschweißen sind, die eine Beschichtung haben, welche zumindest die Oberflächen der Werkstücke (24, 26) in dem zu verschweißenden Bereich bedeckt,
- das Abschleifen der gegenüberliegenden Oberflächen beider Werkstücke (24, 26) ebenso wie die Vorderfläche des oberen Werkstücks (26) in dem punktzuschweißenden Bereich, um die Beschichtung im Bereich der Schweißung zu entfernen,
- das Verbringen dieser Werkstücke (24, 26) in eine überlappende Position, wobei ihre einander gegenüberliegenden abgeschliffenen Oberflächen einander berühren, wobei die obere Fläche des oberen Werkstücks (26) die Vorderfläche und die untere Fläche des unteren Werkstücks (24) die Rückfläche bildet,
- das elektrische Verbinden zumindest eines äußeren Endes von einem (20a) der Kabel (14, 20a, 20b) mit dem unteren Werkstück (24), wobei die überlappten Werkstücke (24, 26) in dem zu verschweißenden Bereich zwischen ein Schweißelektrodenpaar (18a, 18b) so zwischengeschaltet werden, daß die erste Elektrode (18a) die Vorderfläche des oberen Werkstücks (26) und die zweite Elektrode (18b) die Rückfläche des unteren Werkstücks (24) berührt, wobei die beiden Elektroden (18a, 18b) elektrisch verbunden sind mit den Enden von zweien (14, 20b) der Kabel (14, 20a, 20b) mit unterschiedlicher Polarität, während zumindest ein äußeres Ende des Kabels (20a) und die zweite Elektrode (18b), die das untere Werkstück (24) berühren, die gleiche Polarität haben, und
- das Aufbringen eines Stromflusses von der ersten Elektrode (18a) zu dem zumindest einen äußeren Ende der Kabel (20a), das mit dem unteren Werkstück (24) verbunden ist, wobei die Beschichtung auf der Rückfläche des unteren Werkstücks (24) an der Punktschweißstelle durch Abbrennen so entfernt wird, daß die zweite Schweißelektrode (18b) guten elektrischen Kontakt mit der Oberfläche des unteren Werkstücks (24) bekommt und ein großer Schweißstrom zwischen beiden Elektroden (18a, 18b) fließt.

## Revendications

1. Méthode de soudage utilisant une soudeuse par point comprenant une source d'alimentation de soudage qui engendre un courant élevé à basse tension, au moins trois câbles (14, 20a, 20b) de sortie reliant des bornes dans ladite source d'alimentation à des objets à souder,
cette méthode comprenant
la fourniture d'un objet supérieur (26) et d'un objet inférieur (24) à souder en position superposée, présentant un revêtement couvrant au moins les surfaces des objets (24, 26) dans la zone à souder,
l'abrasage des surfaces opposées de chacun des deux objets (24, 26) ainsi que de la surface avant dudit objet supérieur (26) dans la zone à souder par point afin d'éliminer le revêtement dans la zone de la soudure,
le positionnement desdits objets (24, 26) en superposition avec leurs surfaces abrasées opposées en contact l'une avec l'autre de sorte que la surface supérieure de l'objet supérieur (26) constitue ladite surface avant et la surface inférieure de l'objet inférieur (24) constitue la surface arrière,
la connexion électrique d'au moins une extrémité de l'un (20a) desdits câbles (14, 20a, 20b) audit objet inférieur (24) en interposant lesdits objets superposés (24, 26) dans la zone à souder entre une paire d'électrodes de soudage (18a, 18b), de sorte que la première électrode (18a) soit en contact avec la surface avant dudit objet supérieur (26) et la seconde électrode (18b) soit en contact avec la surface arrière dudit objet inférieur (24), les deux dites électrodes (18a, 18b) étant connectées électriquement aux extrémités de deux (14, 20b) desdits câbles (14, 20a, 20b) de polarité différente, tandis que ladite au moins une extrémité dudit câble (20a) et ladite seconde électrode (18b) qui sont en contact avec ledit objet inférieur (24) ont la même polarité,
et l'application d'un courant qui circule depuis ladite première électrode (18a) jusqu'à ladite au moins une extrémité dudit câble (20a) connectée audit objet inférieur (24), de sorte que le revêtement sur la surface arrière dudit article inférieur (24) soit, au point à souder, éliminé par brûlage de façon telle que ladite seconde électrode (18b) de soudage ait un bon contact électrique avec la surface dudit objet inférieur (24) et qu'un courant de soudage important circule entre les deux électrodes (18a, 18b).
